(19) Europäisches Patentamt / European Patent Office / Office européen des brevets

(11) **EP 2 202 663 A1**

(12) **EUROPEAN PATENT APPLICATION**
published in accordance with Art. 153(4) EPC

(43) Date of publication:
**30.06.2010 Bulletin 2010/26**

(51) Int Cl.:
*G06F 21/24* (2006.01)     *G06F 17/30* (2006.01)
*H04N 7/173* (2006.01)

(21) Application number: **08831092.5**

(22) Date of filing: **11.09.2008**

(86) International application number:
**PCT/JP2008/066413**

(87) International publication number:
**WO 2009/035032 (19.03.2009 Gazette 2009/12)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.09.2007 JP 2007267204**

(71) Applicant: **Kodate, Kashiko**
**Bunkyo-ku**
**Tokyo 112-8681 (JP)**

(72) Inventors:
• **WATANABE, Eriko**
  **Tokyo 112-8681 (JP)**
• **ISHIKAWA, Sayuri**
  **Tokyo 112-8681 (JP)**

(74) Representative: **Grünecker, Kinkeldey, Stockmair & Schwanhäusser Anwaltssozietät**
**Leopoldstrasse 4**
**80802 München (DE)**

(54) **MOVING IMAGE DATA CHECKING SYSTEM, MOVING IMAGE DATABASE CREATING METHOD, AND REGISTERING SYSTEM AND PROGRAM FOR REGISTERING MOVING IMAGE DATA IN MOVING IMAGE DATABASE**

(57)     [PROBLEMS] To provide a checking system which allows effective inspection of browsable moving image data in a browsable state on a site on a network.

[MEANS FOR SOLVING PROBLEMS] The checking system for checking browsable moving image data in a browsable state for a site on a network comprises a moving image database in which registered moving image data is registered as information and checking means for checking browsable moving image data with the registered moving image data registered in the moving image database. The browsable moving image data includes a still image displayed as a sample. The moving image database includes a recoding medium on which are recorded a group of registration images composed of multiple frame images created from reproduced moving images reproduced from the registered moving image data as each piece of registered moving image data. The checking means checks a searching image created from the sample still image of the browsable moving image data with the registration image recorded on the recording medium of the moving image database.

FIG. 5

S51 ACQUIRE SAMPLE STILL IMAGE

S52 CONVERT INTO BINARIZED SEARCHING IMAGE S

S53 ACQUIRE MAXIMUM CORRELATION VALUE $V_{max}$ BY CORRELATION OPERATION BETWEEN S AND GROUP OF REGISTRATION IMAGES $B_n$

S54 $V_{max}$ > CHECKING THRESHOLD VALUE

Yes  S56  No

S56 NO NEXT GROUP OF REGISTRATION IMAGES

S55 RECOGNIZE BROWSABLE MOVING IMAGE DATA AS REGISTERED MOVING IMAGE DATA

S57 RECOGNIZE BROWSABLE MOVING IMAGE DATA AS NOT REGISTERED IN MOVING IMAGE DATABASE

## Description

## Technical Field

The present invention relates to a checking system for checking browsable moving image data in a browsable state on a site on a network, a method for creating a moving image database in which multiple pieces of moving image data used for checking browsable moving image data are registered as information, and a registration system and a program for registering moving image data in a moving image database.

## Background Art

In recent years, copyright infringement on the Internet has been acknowledged as a problem, along with the digitalization of information such as novels, music, films and pictures, and the popularization of the Internet. This is due to the fact that the digitalization of information allows the information to be copied without degrading the quality, also to the ease of secondary use or tertiary use of information such as editing or adaptation of information, and further to the environment in which other people's copyrighted works can be easily exploited because of the capability of public transmission via the Internet. In particular, not only groups such as companies but also respective individuals are placed under these environments, thereby making prevention and management of copyright infringement more difficult.

Recently, while moving image sharing service for sharing moving images on the Internet has been provided, copyright infringement has become a big problem in this moving image sharing service. The moving image sharing service refers to a service in which sharing of moving image data uploaded by a user allows other users to download the moving image data, thereby allowing the moving images to be made public and browsed. Tens of thousands of pieces of moving image data are posted per day on this moving image sharing service, and those pieces of moving image data actually include a number of illegal pieces of data which infringe copyrights. For example, films, TV programs, live images, promotion videos, etc, are uploaded without the permission from the owners of the copyrights.

Conventionally, the management of copyrights in the moving image sharing service only states in terms of service or the like that it is forbidden to post moving image data which infringes a copyright, and is left to each user's moral without providing any special inspection system. Even if illegal moving image data is uploaded, data pointed out by a third party as illegal moving image data is only deleted. While owners of copyrights and the like download to reproduce and view uploaded moving image data, thereby searching illegal moving image data, and then reporting the infringement, it is not realistic to check every piece of moving image data increasing by tens of thousands of pieces from day to day. Furthermore, even if illegal moving image data is reported and deleted, the user often posts the illegal moving image data again, and therefore, the conventional countermeasure is not effective.

Now then, most of conventional techniques for searching moving images were techniques of providing moving images with keywords and searching a moving image in accordance with a keyword input by a searcher. However, the methods of searching moving images with the use of keywords have a problem in that it is not possible to search appropriate moving images when provided keywords are inappropriate for moving images. Furthermore, the methods are also problematic in that there are differences among individuals in providing keywords, and the keywords are not always coincident due to differences in subjects or expressions of individuals, and further, moving images other than intended moving images are even searched in the case of the coincidence of the keywords.

In contrast to the methods of searching moving images by keywords, Patent Document 1 discloses a method for searching moving images in which a frame image at switching of scenes of moving images is extracted as a representative frame image, feature values such as the area of a specific color of the image, the time period between the representative frames, the integral value of the sound intensity, and the time period of not less than a certain intensity of sound are calculated from all or part of the representative frame image, codes corresponding to the feature values are assigned, a name of a code or a code string is given to the representative frame to create the name for the moving images with the use of a frame name string corresponding to a representative frame string for the moving images, and this name for the moving images is used to carry out checking.

Patent Document 1: Japanese Patent Application Laid-Open No. 7-114567

## Disclosure of the Invention

## Problems to be Solved by the Invention

However, filtering of illegal moving image data has not been sufficiently achieved in the current moving image sharing service, and an effective method for searching moving images has been demanded. The method for searching moving image in Patent Document 1 mentioned above aims to search a coincident video scene from moving images, not to search illegal moving image data in moving image sharing service.

In order to search illegal moving image data in moving image sharing service, it is necessary to confirm whether moving images uploaded onto the moving image sharing service are illegal or not, and it is necessary to check whether a large number of moving images uploaded onto the moving image sharing service are each illegal or not. The uploaded moving images may be all of original moving images, or only arbitrarily separated part of moving images may be uploaded. In addition, the same moving images may be uploaded more than once, and continuous monitoring is thus also necessary.

Patent Document 1 fails to disclose any approach for searching illegal moving image data in such moving image sharing service. Moreover, in the method for searching moving images in Patent Document 1, the frame name string corresponding to a representative frame string for moving images (the name for moving images) is used for checking, and it is thus necessary for checking to download the uploaded moving images and calculate the name for the uploaded moving images. Therefore, since uploaded moving images have to be downloaded in each case, searching will take time, and the download time will be one of bottlenecks against speeding up. Furthermore, there is a possibility that accurate checking is not able to be carried out, depending on finely separated moving image data or how to separate moving images. Moreover, it is necessary to calculate a name for moving images with respect to continually updated moving image data, thereby resulting in huge volumes to be processed in a processing device. In addition, as for the feature values as the basis for the calculation of the name for moving images, there is a problem such as decrease in authentication accuracy, because even different images are searched if the feature values extracted from the images are coincident with or similar to each other.

Therefore, an object of the present invention is to provide a checking system which allows effective inspection for browsable moving image data in a browsable state on a site on a network. Furthermore, another object of the present invention is to provide a method for creating a moving image database in which moving image data is registered as information, which increases the registered amount of moving image data per unit capacity and also facilitates searching. Moreover, yet another object of the present invention is to provide a registration system and a program, which provides a simplified method and enhances the security against information leaks when moving image data is to be registered in a moving image database. In addition, yet another object of the present invention is to manage copyrights and provide a new business model with the use of these checking system, method for creating the moving image database, registration system, and program. It is to be noted that these objects are each intimately related representative examples, which are related to or overlapped with each other.

**Means For Solving the Problems**

A checking system according to the present invention is a checking system for checking browsable moving image data that can be in a browsing state on a site on a network, **characterized in that** it comprises a moving image database in which multiple pieces of registered moving image data are registered as information and checking means for checking the browsable moving image data with the registered moving image data registered in the moving image database, wherein the browsable moving image data includes a still image displayed as a sample, the moving image database includes a recoding medium on which are recorded a group of registration images composed of multiple registration images created from multiple frame images of reproduced moving images reproduced from the registered moving image data as each piece of registered moving image data, and the checking means checks a searching image created from the sample still image of the browsable moving image data with the registration image recorded on the recording medium of the moving image database.

Further, it is preferable that the checking system according to the present invention have a function of arbitrary or randomly extracting a sample still image from the browsable moving image data. Further, it is preferable that with respect to the group of registration images for each piece of the registered moving image data, a result of a correlation operation between one of the registration images contained in the group of registration images and the other image thereof be less than a preset threshold value. Further, it is preferable that the registration images be subjected to at least binary image processing while being created from the frame images. In this case, it is preferable that the searching image be subjected to at least binary image processing while being created from the sample still image of the browsable moving image data, and that the checking means carry out checking through a correlation operation between the searching image and the registration image.

Further, in the checking system according to the present invention, image feature information on the frame images corresponding to each registration image may be recorded on the moving image database, and the checking system may calculate image feature information on the sample still image of the browsable moving image data to carry out checking with the image feature information recorded on the moving image database. Further, in the checking system according to the present invention, the registered moving image data may be provided with at least one keyword, at least one keyword may be added to the browsable moving image data, and the checking means may check a keyword acquired from the keyword data added to the browsable moving image data with the keyword provided for the registered moving image data.

Further, in the checking system according to the present invention, it is preferable that identification data be added to the browsable moving image data when the browsable moving image data is registered in the moving image database, and it is more preferable that a browsing condition for the browsable moving image data be changed on the basis of the identification data.

Moreover, a method for creating a moving image database according to the present invention is a method for creating a moving image database in which multiple pieces of registered moving image data are registered as information, **characterized in that** the method comprises a reproduction step of reproducing one piece of registered moving image data to obtain reproduced moving images, a creation step of carrying out image processing including binary image processing for a plurality of frame images of the reproduced moving images to create a plurality of registration images; and a recording step of recording a group of registration images composed of the plurality of registration images on a recording medium, and that between the reproduction step and the recording step, a selecting step of carrying out selecting so that a result of a correlation operation between one of the registration images contained in the group of registration images and the other registration image thereof is less than a preset threshold value.

Further, in the method for creating a moving image database, it is preferable that the selecting step include processing of carrying out a correlation operation between the respective registration images created from the respective frame images of the reproduced moving images, and eliminating one of the registration images when the result of the correlation operation is greater than a preset threshold value.

Further, the method for creating a moving image database may comprise a registration data recording step of calculating image feature information for the frame images corresponding to the registration images, and recording the image feature information linked with the registration images.

Further, in the method for creating a moving image database, it is preferable that at least the reproduction step and the creation step be carried out in an information processing device of a registrant carrying one piece of the registered moving image data.

Moreover, a registration system according to the present invention is a registration system for registering registered moving image data in a moving image database in which multiple pieces of registered moving image data is registered as information, **characterized in that** it comprises a network, a server for the moving image database, which is connected to the network, and an information processing device connected to the network, that the information processing device reproduces one piece of the registered moving image data to acquire reproduced moving images, carries out at least binary image processing for a plurality of frame images of the reproduced moving images to create a plurality of transmission images, and transmits the plurality of transmission images to the server for the moving image database, and that the server for the moving image database creates a plurality of registration images from the plurality of transmission images, and records on a recording medium, a group of registration images composed of the plurality of registration images.

Further, in the registration system, it is preferable that the transmission images be the registration images, and that the server for the moving image database record, on a recording medium, a plurality of transmission images transmitted from the information processing device as a plurality of registration images. Further, it is preferable that the information processing device carry out a correlation operation between images based on each frame image of the reproduced moving images, and eliminate one of the images when the result of the correlation operation is greater than a preset threshold value.

Moreover, in order to register registered moving image data in a server for a moving image database in which multiple pieces of registered moving image data are registered as information, a program according to the present invention, permits an information processing device connected via a network to the server for the moving image database to function as reproduction means for reproducing the registered moving image data to obtain reproduced moving images, image processing means for carrying out at least binary image processing for a plurality of frame images of the reproduced moving images to create transmission images, and transmission means for transmitting the plurality of transmission images via the network to the server for the moving image database.

Further, in the program, it is preferable to permit the information processing device to function as selecting means for carrying out a correlation operation between images based on each frame image of the reproduced moving images and eliminating one of the images when the result of the correlation operation is greater than a preset threshold value. In this case, the information processing device may be permitted to function as input means for a threshold value, and the threshold value input from the input means may be used in the selecting means.

## Advantageous Effects of the Invention

The use of the checking system according to the present invention allows browsable moving image data in a browsable state on a site on a network to be checked with registered moving image data registered in a moving image database. Thus, the management of the registered image data and the protection or licensing of copyrights can be collectively put into execution, inspection can be carried out within the range of registration in the moving image database, infringement due to illegal moving image data uploaded can be avoided, and further, exercise of right by the registrant can be avoided. Other advantageous effects will be described in the following embodiments.

**Brief Description of the Drawings**

[FIG. 1] a schematic configuration diagram illustrating a checking system according to the present invention.
[FIG. 2] a block diagram schematically showing the flow of data.
[FIG. 3] (A) a diagram illustrating the data structure of a schematic moving image database and (B) to (E) diagrams respectively illustrating the data structures of schematic registered moving image data.
[FIG. 4] a flowchart of processing for moving image database creation.
[FIG. 5] a flowchart of processing for checking.
[FIG. 6] a configuration diagram of a checking server.
[FIG. 7] (A) to (C) diagrams showing error rates in respective moving image databases.
[FIG. 8] a diagram showing error rates in a checking system using a sample still image as a searching image.

**Best Mode for Carrying Out the Invention**

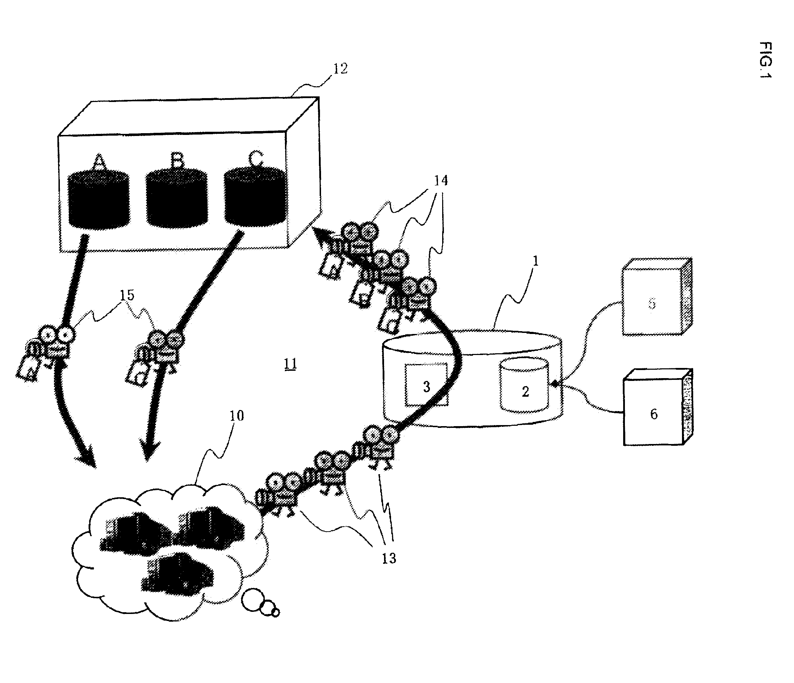

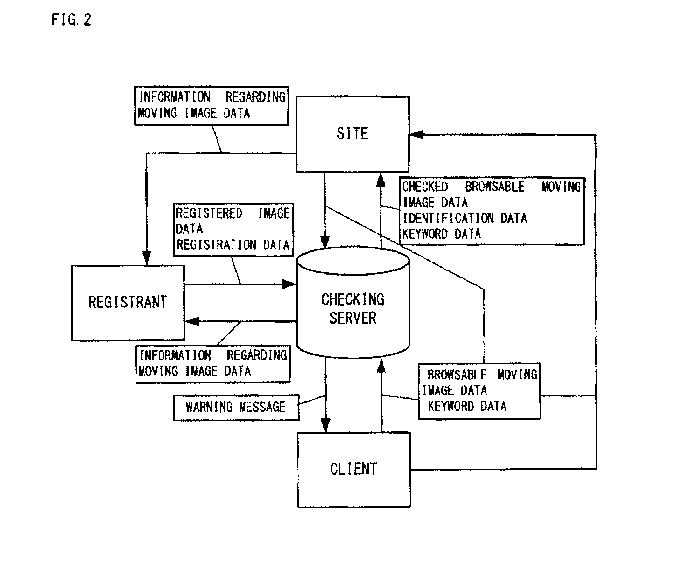

While embodiments of the present invention will be described below with reference to the drawings, the present invention is not to be considered limited to the following examples. FIG. 1 is a schematic configuration diagram illustrating a checking system according to the present invention and an associated system, and FIG. 2 is a block diagram schematically illustrating a data flow. In FIG. 1, a network 11 is formed to which a group of clients 10 is connected, and on the network 11, a site 12 is started which provides image data that can be in a browsing state to the group of clients 10, and a checking server 1 is provided which checks browsable moving image data 13 that can be in a browsing state on the site 12. First of all, the entire checking system and a business model thereof will be schematically described, and a specific configuration of the checking system will be then described in detail.

The checking sever 1 is provided with an image database 2 in which multiple pieces of registered moving image data are registered as information, and a checking means 3 for checking the browsable moving image data with the registered moving image data registered in the image database 2. The registered moving image data is provided by registrants 5, 6, and registered in the image database 2.

The registrants 5, 6 refer to, for example, the operator of the site12, or the owner of copyright or producer for the registered moving image data. As shown in FIG. 2, registration data such as the title, browsing condition, keyword, image feature information, etc. for the registered moving image data can be also registered at the same time here. The registration data may be arbitrarily registered on the checking server or site, not by registrants 5, 6.

The group of clients 10 is composed of multiple clients using the site 12 and connected to the network 11, and can request the server for the site 12 to allow moving image data to be browsed. For example, as the group of clients 10, users of a moving image sharing site and members of paid content can be cited, and as a specific terminal device, personal computers, personal digital assistants, cellular phones, etc. can be cited.

The network 11 refers to a telecommunication network connecting between the terminal devices of the clients, and the Internet, a WAN (Wide Area Network), a LAN (Local Area Network), etc. can be sited as the network 11.

The site 12 has content prepared for providing browsable moving image data to the group of clients 10, and in FIG. 1, has types A, B, and C of content prepared, which differ from each other in browsing condition. As the types A, B, and C of content, for example, completely free content, content only partially allowed to be viewed, paid content, etc. can be cited. The site 12 can also require a keyword to be set on posting for browsable moving image data to be posted. Furthermore, the site 12 may be configured to display at least one still image (generally referred to as a thumb nail image) as a sample for browsable moving image data posted.

The browsable moving image data 13 is preferably brought in a browsing state on the site 12 after being checked by the checking server 1. However, as shown in FIG. 2, the browsable moving image data 13 may be uploaded directly on the site 12 without being routed through the checking server 1. When the browsable moving image data 13 is uploaded directly onto the site 12, the checking server 1 may acquire the browsable moving image data from the site 12, and check the browsable moving image data with the registered moving image data. In FIG. 1, the browsable moving image data 13 is uploaded from the group of clients 10 via the network 11 to the server for the site 12. It is to be noted that the uploaded browsable moving image data 15 is, in response to a request for browsing from the other client, downloaded via the network 11 to the terminal device owned by the client. The browsable moving image data 13 may be brought into a browsing state by someone other than the clients, or may be transmitted to the site 12 by a means other than the network. Further, while only a link is put to the site 12, the browsable moving image data 13 itself may be stored in the terminal device owned by the provider of the moving image data. When a request for browsing is made from the other client via the link put to the site 12, the browsable moving image data is directly downloaded from the terminal device owned by the provider to the terminal device owned by the other client.

In the checking system according to the present invention, in order to carrying out the processing for checking at higher speed, it is preferable that the browsable moving image data include a still image to be displayed as a sample. The still image to be displayed as a sample refers to a frame image of reproduced moving images of the browsable moving image data, or the frame image reduced in volume, which is an image to be displayed on at least the checking server. While the still image is typically the first fame image of the reproduced moving images, the still image is not to be considered limited thereto. In addition, the still image to be displayed as a sample may be a single image or multiple images. The still image to be displayed as a sample includes not only an image to be displayed as a thumbnail image of browsable moving image data posted on the site 12, but also a still image to be downloaded and displayed as a sample of browsable moving image data, even which is not displayed on the site 12, when a client requests for browsing, and a still image based on an arbitrarily or randomly extracted frame image which is not displayed by the client or on the network, as will be described later. It is to be noted that as shown in FIG. 1, when the browsable moving image data 13 is uploaded from the group of clients 10 via the checking server 1 onto the site 12, the browsable moving image data 13 will include the still image to be displayed as a sample, as long as a frame image of reproduced moving images of the browsable moving image data 13 or the frame image reduced in volume can be downloaded as an interface between information processing devices of the group of clients 10 and an information processing device of the checking server 1.

Furthermore, it is preferable to add, to the browsable moving image data 13, at least one piece of keyword data for making the checking and the searching easier (see FIG. 2). The keyword data may be optionally selected by the person who posts the browsable moving image data 13, or a keyword may be set in advance, which specifies the field of the image data. Alternatively, a configuration may be employed in which posting on the site 12 is not allowed unless a keyword is entered. This keyword data may be used when the client searches an image on the site 12, or may be used for making the checking easier in the moving image database 2 of the checking server 1. For example, when registered image data is to be registered in the moving image database 2, a keyword may be recorded as registration data to carry out checking from registered image data corresponding to the keyword data, or registered image data may be registered as the moving image database 2 for each field or keyword to carry out checking from a region corresponding to the keyword data.

It is preferable to add identification data to the checked browsable moving image data 14 which has been checked by the checking server 1. The identification data can be the data that is history of checking finished in the checking server 1 or the data that identifies whether or not the browsable moving image data 13 is registered in the moving image database 2, and the data that may further contain a portion of the browsing condition or registration data when the browsable moving image data 13 is registered in the moving image database 2.

For example, when the browsable moving image data 14 to which identification data of checking finished has been added in the checking server 1 is downloaded to the other client and posted again from the other client, the checking server 1 can recognize the identification data of checking finished to determine whether or not checking is necessary for the browsable moving image data 14 to which the identification data has been added. Furthermore, if information on whether or not registered in the moving image database 2 is contained as identification data, it is possible to change the browsing condition depending on whether or not to be registered, or to manage moving image data on the network. Moreover, if information such as a title for a moving image and a browsing condition is also contained in the identification data, setting or management of more detailed browsing condition is made possible.

As the browsing condition, for example, deleting image data without allowing the posted browsable moving image data 13 to be browsed, treating image data as charged content, charging for image data depending on the number of browsing records, bringing only a portion of image data into content allowed to be viewed, bringing image data into invalid content, etc. can be cited.

In FIG. 1, the browsable moving image data 13 is checked against the moving image database 2 of the checking server 1, to which identification data A to C is added depending on the checking result, and uploaded onto each content of A, B, or C prepared on the site 12, on the basis of the identification data A to C.

It is to be noted that a configuration may be employed in which the identification data is added only to data registered in the moving image database 2, of the browsable moving image data. Alternatively, when processing of the browsable moving image data is carried out depending on the checking result in the checking server 1, the identification data may or may not be added to the browsable moving image data. For example, if registered moving image data registered in the moving image database 2 is not allowed to be browsed or uploaded at all, the browsable moving image data which is coincident with the registered moving image data registered in the moving image database may be deleted in the checking server 1, and any identification data may or may not be added to the browsable moving image data to be uploaded onto the site 12. In other words, the upload itself onto the site 12 means that the browsable moving image data is not registered in the moving image database. In addition, only if the aim is to merely survey data or manage how many times moving image data is posted, the information may be provided to the registrant in the checking server 1, and identification data may or may not be added to the browsable moving image data 13.

Furthermore, when the browsable moving image data 13 is registered in the moving image database 2, the checking server 1 or the site 12 may provide information regarding the moving image data to the registrant who has registered the moving image data in the moving image database 2 (see FIG. 2). The information regarding the moving image data includes, for example, the number of posting records for the registered moving image data, the number of browsing (download) records, information on the client who posts the moving image data, etc.

Furthermore, the checking server 1 may transmit, to the client who has posted, as the browsable moving image data 13, the moving image data registered in the moving image database 2, a warning message which warns that posting the image data infringes the copyright (see FIG. 2). The awareness of the group of clients 10 to copyright can be enhanced by transmitting such a warning message.

The use of the checking system described above allows each of the registrants 5, 6 to collectively put the management of the registered image data and the protection or licensing of copyrights into execution on the network 11 by registering moving image data desired to be managed, as the registered moving image data, in the moving image database 2. Furthermore, the site 12 can inspect the browsable moving image data within the range of registration in the moving image database 2, and can avoid infringement due to illegal moving image data uploaded, and further avoid exercise of right by the registrant.

More specifically, the checking server 1 can provide, to the registrants 5, 6, service of registering in the moving image database 2 moving image data desired to be managed, and also provide service of acting for a part of management of the registered moving image data. Furthermore, the checking server 1 can provide, to the site 12, service of inspecting the browsable moving image data within the range of registration in the moving image database 2, and also provide service of acting for a part of management of the browsable moving image data. It is to be noted that the registrants 5, 6 or the site 12 itself can also provide the checking server 1.

Next, the checking server 1 will be described. The checking system 1 is provided with a recording medium with the moving image database 2 recorded thereon in which multiple pieces of registered moving image data are registered as information, and an information processing device which functions as at least part of the checking means 3 for checking browsable moving image data with the registered moving image data registered in the moving image database 2.

One of features of the checking system with the checking server 1 according to the present invention is in that checking final browsable moving image data with registered moving image data is carried out by comparing the images with each other (including pieces of computerized image data with each other). More specifically, while the checking system according to the present invention does not eliminate conventional checking with the use of keywords or feature values, it is essential for the checking system to directly check a registration image created from reproduced moving images of the registered moving image data with a searching image created from reproduced moving images of the browsable moving image data. Since the images are directly checked with each other, the checking accuracy can be increased. Furthermore, with, as the registered moving image data, a recorded group of registration images composed of registration images corresponding to major frame images of reproduced moving images of the registered moving image data, the searching image can be reliably searched even in any scene of the registered moving image data.

Therefore, even in the case of checking with the use of only a searching image created from a sample still image of browsable moving image data, checking with a group of registration images of registered moving image data can determine whether or not the browsable moving image data is coincident with or similar to the registered moving image data. Since the sample still image itself is quite small in terms of data volume as compared with the download of the browsable moving image data, the download time can be reduced, thereby allowing for high speed checking. Then, this checking can also be an effective checking means for large amounts of browsable moving image data uploaded onto the site. For example, even when the volume of browsable moving image data is several MB (megabytes) or more, the download time and computation can be overwhelmingly reduced because the thumbnail image itself is image data on the order of 128 pixels (horizontal) × 96 pixels (vertical).

With respect to the checking system with the use of a thumbnail image as described above, there is a possibility that a malicious client will apply some sort of image processing to a frame image to serve as a thumbnail image to interfere with checking. Therefore, the checking system preferably further has the function of arbitrarily or randomly extracting a sample still image from the browsable moving image data. In order to achieve the function, a program may be used which permits an information processing device of a client for upload, an information processing device of a checking server, an information processing device of a server for a site, or the like to function as a reproduction means for reproducing browsable moving image data to obtain reproduced moving images or an image creation means for extracting an arbitrary frame image or randomly extracting a frame image from the reproduced moving images and creating a sample still image from the extracted frame image. In this case, for the sample still image, it is preferable to create multiple sample still images from multiple frame images separated from each other in terms of time. Furthermore, in order to improve the reliability of the checking system, it is preferable to provide a program which is not allowed to be manipulated by clients in terms of location for extracting frame images, and it is also effective to provide a configuration in which it is not possible for clients or on the network to browse which frame image is extracted.

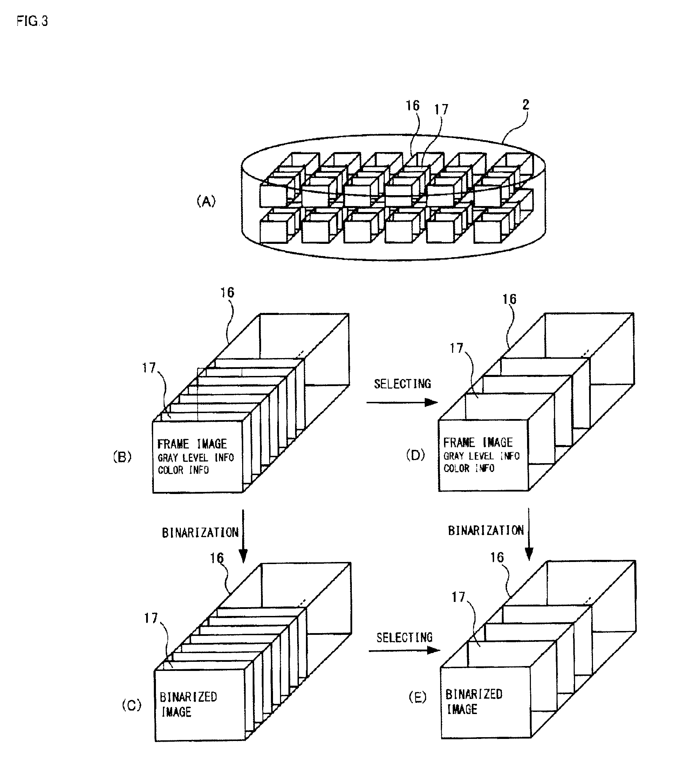

In addition, on the moving image database 2, a group of registration images is recorded as each piece of registered moving image data, which is composed of multiple registration images created from multiple frame images of reproduced moving images reproduced from the registered moving image data. More specifically, as shown in FIG. 3(A), there are relationships among the moving image database 2, the group of registration images, and the registration images, in such a way that the multiple groups of registration images 16 in accordance with the number of pieces of registered moving image data are recorded on the moving image database 2, and each group of registration images 16 contains multiple registration images 17.

When all of the frame images of reproduced moving images are directly registered as the multiple frame images, the maximum information content of the registered moving image data will be recorded, thereby resulting in longer calculation time and a huge storage capacity required. Moving images currently used in Japan have 29.97 fps (frames/second) in line with the NTSC standards for TV broadcasting and 24fps for movies, which are respectively composed of about 30 frames and 24 frames of still images per second. Furthermore, each frame image includes pattern information built up from a pixel array with the number of pixels in accordance with the resolution and includes color information per pixel. Thus, if all of the frame images are registered as a group of registration images, the total volume of data will be extremely large. For example, a fill-color (24-bit) image with a resolution of 600 × 480 has a data volume of 27 MB according to simple calculation, and the number of frame images is 129,600 in the case of a movie (24 fps) for 90 minutes. Thus, even the calculation for one piece of moving image data is hardly realistic.

Therefore, it is highly preferable to create registration images by applying at least binary image processing to frame images of reproduced moving images. The binary image processing refers to processing for converting each image into an image displayed in two colors of white and black (0 and 1), and the data volume of registration images can be significantly reduced by carrying out the binary image processing, because general moving image data has, for each pixel, at least gray level information (8 bits), and often has color information (24 bits). Moreover, when correlation operation is carried out to check a binarized registration image subjected to the binary image processing and a binarized searching image likewise subjected to binary image processing, the operation speed is of course higher than in the correlation operation for full-color images or gray scale images, and the checking accuracy may also be improved. Thus, the binary image processing is quite useful processing. Furthermore, as a small amount of computation is required for images subjected to the binary image processing, it is also possible to manufacture a dedicated computation device as hardware with the use of an integrated circuit such as an LSI.

Approaches for the binary image processing can be broadly divided into two types of a fixed threshold method and an area definition method. The former refers to a method in which a value of gray scales is determined as the threshold value for binarization, whereas the latter refers to a method in which the ratio of binarization to the entire image is determined in advance, and the threshold value for binarization is then determined from a histogram of concentration values. When it is assumed that the threshold value for binarization, the elements for each pixel of an original image, and the elements for each pixel of a binarized image are denoted respectively by T, f(i, j), and g(i, j), the definition can be made as in the following mathematical formula (1).

[Formula 1]

$$g\left(i,j\right) = \begin{cases} 1 & f\left(i,j\right) \geq T \\ 0 & f\left(i,j\right) < T \end{cases} \qquad (1)$$

It is to be noted that in the case of a color frame image, the image may first have its color information removed to be changed to an image in a gray scale with only gray level information, followed by binarization. Moreover, other image processing may be applied to frame images or binarized images. For example, image processing for changing the resolution, edge enhancement processing, etc. may be carried out before or after the binary image processing.

In addition, the binary image processing involves irreversible conversion for basically only deleting information, unlike processing for converting the data format, compression processing, and encryption processing. More specifically, the processing for converting the data format, compression processing, and encryption processing involve the restoration of original frame images, which thus include therein or in a separate file, information which can be subjected to reverse conversion. However, the binary image processing only discards color information and gray level information belonging to original frame images. Thus, the binarized images themselves are not able to restore the original frame images.

The inability to restore the original frame images seemingly appear to be a disadvantage. However, the inability is actually effective for preventing leaks of information on the original moving image data. More specifically, when original moving image data to be registered in the moving image database is provided as registered moving image data from a registrant to the checking server, the original moving image data is at risk of leakage due to an accident in the distribution, an accident in the network transmission, a factitious leak of information, etc. For example, if a movie being released or an unreleased live image is leaked, the loss will grow too great. However, when an information processing device of the registrant carries out at least the binary image processing for frame images of the registered moving image data to provide binarized images to the checking server, the original moving image data is prevented from being leaked even if the binarized images are leaked, because the binarized images themselves have no ability to restore the original moving image data. A registration system and a program for the registration of moving image data in the moving image database will be described later, which utilize this advantageous effect.

Furthermore, in order to reduce the number of registration images, it is preferable to select the registration images to some extent for registration, by the elimination of similar images without the registration of the similar images. For this purpose, based on the correlation operation carried out between the respective frame images of the registered moving image data, or between the respective frame images subjected to image processing (including binarized images), any one of the images may be eliminated if the result is greater than a preset threshold value, or at least one of the images may be registered if the result is less than the threshold value. The threshold value is taken as the criterion of the similarity for selecting. Thus, when the threshold value is higher, the checking accuracy is generally improved while the number of registration images is also increased, or when the threshold value is lower, the checking accuracy is reduced while the number of registration images is also decreased. Therefore, it is preferable to obtain an optimum threshold value in advance through experiment or the like. In addition, when the registrant is allowed to change the threshold value, the threshold value can be made higher for important moving image data, and the threshold value can be set lower for less important moving image data. It is to be noted that it is not necessary to carry out the correlation operation between one of the registration images and all of the other registration images, and what is required is that the result of the correlation operation between one of the registration images and at least one of the other registration images is less than the threshold value.

As the correlation operation, for example, the inner product, Euclid distance, or correlation coefficient between the registration images can be obtained to calculate the similarity. When the elements for each pixel of registration images F, G with N × N pixels are expressed by one-dimensional column vector f and column vector g, the inner product can be calculated by the formula (2), the Euclid distance can be calculated by the formula (3), and the correlation coefficient can be calculated by the formula (4). It is to be noted that the calculation of the similarity is not to be considered limited to these methods.

[Formula 2]

$$< \vec{f}, \vec{g} >= \sum\nolimits_{k=0}^{N-1} f_k g_k \qquad (2)$$

[Formula 3]

$$d_e = \sqrt{\sum\nolimits_{k=0}^{N-1} \left( f_k - g_k \right)^2} \qquad (3)$$

[Formula 4]

$$R = \frac{\sum_{k=0}^{N-1} f_k g_k}{\sqrt{\sum_{k=0}^{N-1} f_k^2} \sqrt{\sum_{k=0}^{N-1} g_k^2}} \quad (4)$$

FIGS. 3(B) to 3(E) schematically shows the data structure of each piece of registered moving image data described above. FIG. 3(B) shows a group of registration images 16 which are all of frame images of reproduced moving images, in which each registration image 17 is each frame image and includes gray level information and color information. FIG. 3(C) shows a group of registration images 16 which are corresponding to the frame images in FIG. 3(B) subjected to the binary image processing, in which each registration image 17 is a binarized image and thus have the gray level information and color information removed, allowing the data volume of the group of registration images 16 to be reduced. FIG. 3(D) shows a group of registration images 16 which are corresponding to the frame images in FIG. 3(B) subjected to selection, in which each registration image 17 is a selected frame image, allowing the data volume of the group of registration images 16 to be reduced by the volume of the removed frame images. FIG. 3(E) shows a group of registration images 16 which are corresponding to the frame images in FIG. 3(B) subjected to both the binary image processing and selection. After carrying out the binary image processing first, the binarized images may be selected (FIG. 3(B) → FIG. 3(C) → FIG. 3(E)), or after selecting the frame images, the binary image processing may be carried out (FIG. 3(B) → FIG. 3(D) → FIG. 3(E)). In FIG. 3(E), each registration image 17 is a selected binarized image, allowing the data volume to be reduced significantly as compared with FIG. 3(B).

A method for creating such a moving image database may include a reproduction step of reproducing one piece of registered moving image data to obtain reproduced moving images, a creation step of carrying out at least binary image processing for a plurality of frame images of the reproduced moving images to create a plurality of registration images, a recording step of recording a group of registration images composed of the plurality of registration images on a recording medium, and between the reproduction step and the recording step, a selecting step of carrying out selecting so that the result of correlation operation between one of the registration images contained in the group of registration images and the other registration image thereof is less than a preset threshold value. As described above, any of the creation steps including the binary image processing and the selecting step may be carried out first, and the other image processing or steps may be carried out between the steps or before or after the steps. However, in order to increase the operation speed of and improve the accuracy of the processing for the correlation operation in the selecting step, it is preferable to carry out the correlation operation in the selecting step after carrying out the binary image processing.

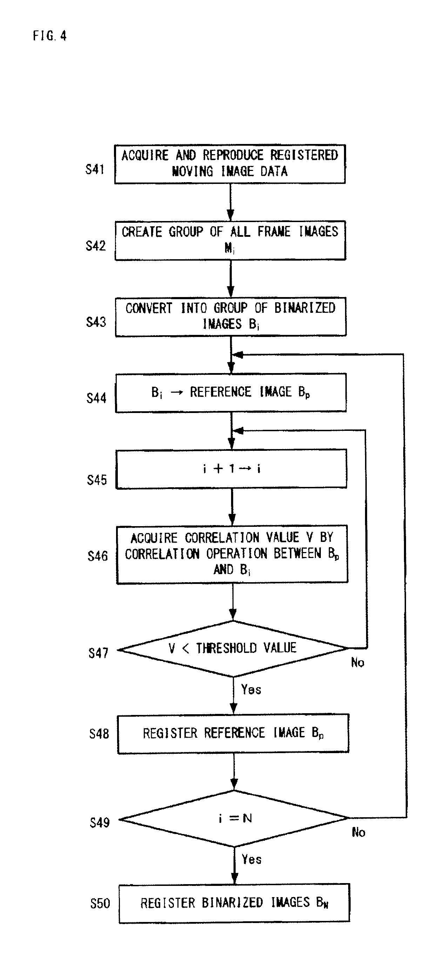

FIG. 4 is an example of a flowchart of processing for moving image database creation. First, registered moving image data is acquired to reproduce the registered moving image data (S41: reproduction step). From the reproduced moving images, a group of all frame images $M_i$ (i = 1, 2, 3, ... N; N: the number of frames) is created, and the binary image processing is carried out for the group of all frame images $M_i$ to convert the group of all frame images $M_i$ to a group of binarized images $B_i$ (i = 1, 2, 3, ... N; N: the number of frames) (S42 to S43: creation step). Next, $B_i$ (initial value i = 1) is assigned as a reference image $B_p$ to be the criterion for comparison, and the correlation operation is carried out between the reference image $B_p$ and a binarized image $B_i$ (i = i + 1) to be compared to acquire a correlation value V (S44 to S46: selecting step). If the correlation value V is a threshold value or more (No in S47: selecting step), it is determined that the reference image $B_p$ and the binarized image $B_i$ are similar to each other, the binarized image $B_i$ is eliminated without registering the binarized image $B_i$ in the moving image database, and the correlation operation is carried out between the reference image $B_p$ and the next binarized image $B_i$ (i = i + 1) (S45 to S46). On the other hand, if the correlation value V is less than the threshold value (Yes in S47: selecting step), it is determined that the reference image $B_p$ and the binarized image $B_i$ are not similar to each other, the binarized image $B_i$ (its initial value is a binarized image $B_i$) is registered in the moving image database (S48: recording step), and with the dissimilar binarized image $B_i$ as the next reference image $B_p$, the correlation operation is carried out between the reference image $B_p$ and the next binarized image $B_i$ (i = i + 1) (No in S49, S44 to S46). It is to be noted that when the binarized image $B_i$ is the binarized image $B_N$ of the last frame in S49, the frame image $B_N$ is registered to terminate the processing (S50). Ultimately, a plurality of reference images registered as dissimilar images are recorded as a group of registration images $B_m$ (m = 1, 2, 3, ... M; M is the number of registration images).

It is to be noted that in the algorithm in the flowchart shown in FIG. 4, the correlation operation is carried out with respect to the first reference image and the next reference image while the correlation operation is not carried out with respect to the other reference images, and there is thus a possibility that similar images are registered. In this regard, if the correlation operation is sequentially carried out between the first reference image and all of the other binarized images, the binarized images with their correlation values greater than the threshold value are eliminated without registering the binarized images in the moving image database, and with one of the binarized images with their threshold values greater as the next reference image, the correlation operation is sequentially carried out between the reference image and the other binarized images, then the number of registration images can be further reduced.

Furthermore, a step of recording registration data may be included, in which registration data is recorded such as a title corresponding to a group of registration images, browsing conditions, keywords, and image feature information on a frame image corresponding to a registration image. As for the image feature information, when a registration image is a binarized image or a gray scale image, the features, if any, of the allocation, area, etc. of a specific color in the original frame image are recorded as information, image feature information is also calculated for a frame image corresponding to a searching image, and the image feature information can be utilized for secondary checking.

The creation of the moving image database may be carried out by only the checking server, or some steps of the creation may be carried out by an information processing device of a registrant. The reproduction step of obtaining reproduced moving images and the creation step of carrying out the binary image processing for frame images are preferably carried out by an information processing device of a registrant in order to prevent leaks of information as described above. The registration images or transmission images created by the information processing device of the registrant may be transmitted via the network to the checking server, or may be delivered to the checking server off-line.

Furthermore, to describe an example of a registration system utilizing the network, the registration system includes a network, an information processing device connected to the network, and a server for a moving image database. Then, the information processing device reproduces one piece of registered moving image data to acquire reproduced moving images, and carries out at least the binary image processing for a plurality of frame images of reproduced moving images to create a plurality of transmission images. The transmission images may be the frame images subjected to at least the binary image processing, and may be subjected to other image processing and recorded directly as registration images in the sever for the moving image database or may be subjected to further image processing, etc., and then recorded in the sever for the moving image database. Moreover, the information processing device transmits a plurality of transmission images via the network to the server for the moving image database. Since the plurality of transmission images are binarized images subjected to the binary image processing, the transmission images are not able to be reversed to the reproduced moving images even if the transmission images are leaked on the network, thus allowing information on the reproduced moving images to be prevented from being leaked. The server for the moving image database creates a plurality of registration images from the plurality of received transmission images, and records on a recording medium, a group of registration images composed of the plurality of registration images. It is to be noted that when the plurality of received transmission images can be used directly as registration images, the server for the moving image database records on a recording medium, the plurality of transmission images directly as a plurality of registration images.

Furthermore, the information processing device may carry out the correlation operation between images based on each frame image of the reproduced moving images, and eliminate one of the images from the transmission images if the result of the correlation operation is greater than a preset threshold value. This is a case in which the selecting step is also carried out in the information processing device connected via the network, rather than the server for the moving image database, thereby allowing the total data volume of the transmission images to be reduced. It is to be noted that the images based on the frame images include the frame images themselves, the frame images subjected to image processing other than the binary image processing, and the frame images subjected to he binary image processing.

In order to utilize the registration system, a program should be installed in the information processing device, which permits the information processing device to function as a reproduction means for reproducing the registered moving image data to obtain reproduced moving images, an image processing means for carrying out at least the binary image processing for a plurality of frame images of the reproduced moving images to create transmission images, and a transmission means for transmitting the plurality of transmission images via the network to the server for the moving image database. Further, the information processing device may be permitted to function as a selecting means for carrying out the correlation operation between images based on each frame image of the reproduced moving images, and eliminating one of the images if the result of the correlation operation is greater than a preset threshold value. In this case, the information processing device may be permitted to function as a means for inputting a threshold value so that the registrant can select the threshold value.

Now then, a high-capacity hard disk, a holographic recording medium, and the like can be used as the recording medium for the moving image database. In the case of using a high-capacity hard disk for the moving image database and checking images through operational processing, the information processing device can be used as a checking means. On the other hand, in the case of using a holographic recording medium, an optical recording medium and checking means are required. The checking system, moving image database, and registration system described above, can be used in any checking means.

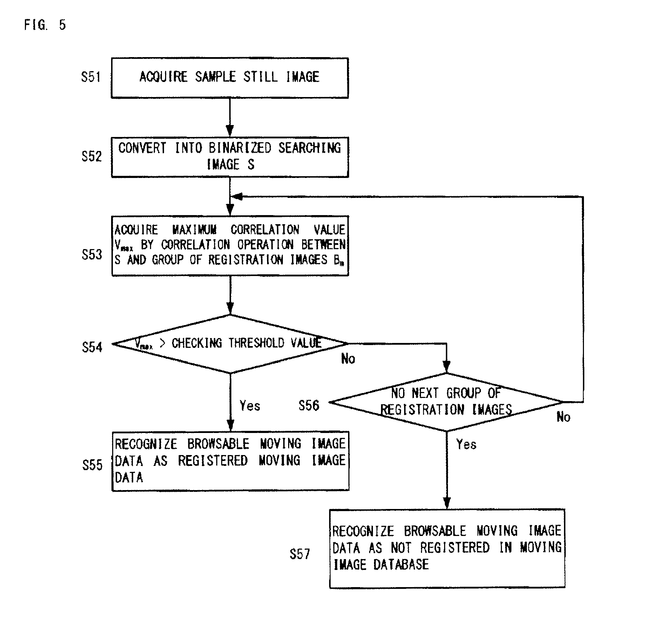

Next, the operation for checking in the checking means will be described. As already mentioned, in the checking system according to the present invention, it is preferable to carry out checking with the use of a searching image created from a sample still image of browsable moving image data. FIG. 5 is a flowchart of processing for checking in the case of carrying out checking by an information processing device with the use of a searching image created from a sample still image of browsable moving image data, in a moving image database in which a group of registration images subjected to the binary image processing is recorded.

First, an information processing device of a checking server acquires a sample still image of browsable moving image data (S51). Next, the still image is subjected to the binary image processing to be converted into a binarized searching image S (S52). Then, the correlation operation is sequentially carried out between the binarized searching image S and each registration image of a group of registration images $B_m$ (m = 1, 2, 3, ... M; M is the number of registration images) recorded in a moving image database to acquire the maximum correlation value $V_{max}$ (S53). The maximum correlation value $V_{max}$ is compared with a checking threshold value for the moving image data, and if the maximum correlation value $V_{max}$ is greater than the checking threshold value (Yes in S54: checking step), the browsable moving image data is recognized as registered moving image data of the group of registration images (S55). Alternatively, if the maximum correlation value $V_{max}$ is the checking threshold value or less (No in S54: checking step), the browsable moving image data is not recognized as registered moving image data of the group of registration images, and it is determined whether or not there is the next group of registration images (S56). If there is the next group of registration images (No in S56), the correlation operation is again sequentially carried out between the searching image S and each registration image of another group of registration images to acquire the maximum correlation value $V_{max}$, and the maximum correlation value $V_{max}$ is compared with the checking threshold value (S53 to S54). If there is no next group of registration images (Yes in S56), no browsable moving image data is recognized as being registered in the moving image database (S57).

In the processing (S52) in which the still image is subjected to the binary image processing to be converted into the binarized searching image S, other image processing can be further carried out. For example, image processing for changing the resolution, edge enhancement processing, etc. may be carried out before or after the binary image processing. Furthermore, in the selection of the group of registration images for checking with the searching image S, keyword data of the browsable moving image data, image feature information on the sample still image, etc. may be acquired to, while referencing the registered data, preferentially select a group of registration images with the keyword data registered or preferentially select a group of registration images including registration images with coincident image feature information.

Furthermore, the information processing device for the checking server may provide, as identification data, the checking result for the checked browsable moving image data, and upload the data onto the site.

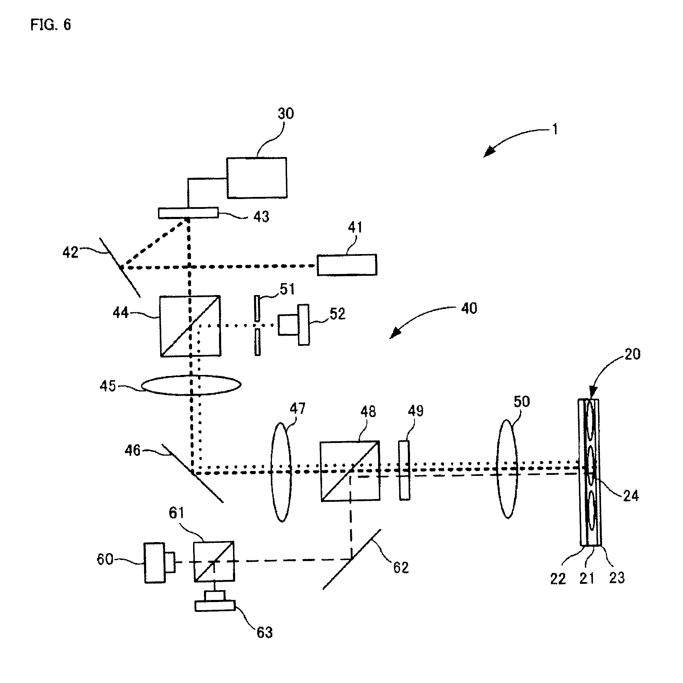

The checking server 1 utilizing a holographic recording medium will be briefly described below. FIG. 6 shows a specific configuration of the checking server 1 utilizing a holographic recording medium, which includes a holographic recording medium 20, an information processing device 30, and an optical system 40. The checking server 1 is provided with the image database 2 and the checking means 3, in which the holographic recording medium 20 constitutes a part of the image database 2, and the information processing device 30 and the optical system 40 constitute the checking means 4.

In FIG. 6, the holographic recording medium 20 is a reflective recording medium with a thick hologram recording layer 21 composed of a photosensitive material, sandwiched between a surface protection layer 22 and a reflective layer 23. Image data is recorded on the hologram recording layer 21 of the holographic recording medium 20 by an interference fringe 24 resulting from information light generated on the basis of the registration image data and reference mark light generated on the basis of a reference mark. When a disk-shaped holographic recording medium is employed as the holographic recording medium 20, checking can be carried out while rotating the disk-shaped holographic recording medium, thereby allowing the checking speed to be increased. Furthermore, it is preferable that the holographic recording medium 20 include an address layer for specifying the location of the interference fringe 24. For example, pits may be formed as address information by a concavo-convex shape provided at the surface of the reflective layer 23 to use the reflective layer 23 as the address layer. The use of a glass substrate as the surface protection layer 22 of the holographic recording medium 20 can prevent contraction, etc. due to change in temperature, etc. As the reflective layer 23, a metal material such as aluminum can be used.

The information processing device 30 is connected to the network, and performs various types of information processing executed in the checking system. The types of information processing include, for example, reproduction of browsing image data and creation of searching images, recording and reproduction of registration data, addition of identification data to browsable moving image data, determination of the order of checking on the basis of keyword data, transmission of information regarding moving image data, transmission of a warning message, etc.

The optical system 40 can record an interference fringe on the holographic recording medium 20, and check browsing image data against registration image data recorded on the holographic recording medium 20. The optical system 40 includes a laser 41 for hologram, a mirror 42, a spatial light modulator 43, a polarization beam splitter 44, a first relay lens 45, a mirror 46, a second relay lens 47, a beam splitter 48, a quarter wavelength plate 49, an object lens 50, an aperture 51, and a reference light detector 52, and further includes a laser 60 for addressing, a beam splitter 61, a mirror 62, and an address light detector 63.

The laser 41 for hologram serves as a light source for information light and reference light when an interference fringe is to be recorded, or serves as a light source for searching light when checking is to be carried out, for which, for example, short-wavelength high-power lasers such as blue lasers and green lasers are preferable. The spatial light modulator 43 has a plurality of pixels, and can spatially modulate light by changing the attribute of light for each pixel, for which, for example, a liquid crystal display device or a DMD (Digital Micromirror Device) can be used. In FIG. 6, a DMD is used as the spatial light modulator 32. The polarization beam splitter 44 transmits one of the linear polarized lights the directions of polarization of which is perpendicular to each other and reflects the other, transmits information light, reference light, and searching light directed to the recording medium 20, and reflects reference light reproduced by the recording medium toward the reference light detector 52. The first and second relay lenses 45, 47 form an image displayed on the spatial light modulator 43 onto the focal plane of the object lens. The beam splitter 48 is provided to direct light from the laser 60 for addressing toward the recording medium 20. The quarter wavelength plate 49 converts linearly polarized light into circularly polarized light, which can transmit linearly polarized light twice to rotate the linearly polarized light by 90 degrees. This quarter wavelength plate 49 causes reference light to transmit through the polarization beam splitter 44 for irradiation, or to be reflected by the polarization beam splitter 44 for reproduction. The object lens 50 applies Fourier transform to an image displayed on the spatial light modulator 43 to irradiate the hologram recording layer 21 of the recording medium 20. The aperture 51 has an opening which blocks searching light reflected by the recording medium 20 and transmits only reproduced reference light to the reference light detector 52. The reference light detector 52 detects a reproduced reference light, and particularly preferably, detects the optical power of reference light, for which, for example, a pin photodiode, a CMOS sensor, and a CCD sensor can be used.

Light emitted from the laser 41 for hologram is reflected by the mirror 42, and spatially modulated by the spatial light modulator 43 with a registration image or a searching image displayed thereon to generate information light or searching light. The information light or searching light transmits through the polarization beam splitter 44, is relayed by the first and second relay lenses 45, 47 between which the light is reflected by the mirror 46, transmits through beam splitter 48 and the quarter wavelength plate 49, and is subjected to Fourier transform by the object lens 50 to irradiate the hologram recording layer 21 of the recording medium 20. The information light interferes with the reference light to record an interference fringe in the hologram recording layer 21. Furthermore, the searching light is diffracted by the interference fringe to reproduce the reference light when the correlation value between the searching light and the information light which has recorded the interference fringe recorded on the hologram recording layer 21. The reproduced reference light is reflected by the reflective layer 24 and emitted from the recording medium 20, transmits through the object lens 50, the quarter wavelength plate 49, the beam splitter 48, the first and second relay lenses 45, 47, and the mirror 46 in a direction opposite to the direction during the irradiation, is reflected by the polarization beam splitter 44, transmits through the aperture 51 and enters the reference light detector 52.

Furthermore, the laser 60 for addressing, the beam splitter 61, the mirror 62, and the address light detector 63 are provided to specify the irradiation position from an address layer when the recording medium 20 is provided with the address layer. Light emitted from the laser 60 for addressing transmits through the beam splitter 61, is reflected by the mirror 62 and further reflected by the beam splitter 48, and transmits through the quarter wavelength plate 49 to irradiate the address layer of the recording medium 20 by the object lens 50. Reflected light from the recording medium 20 transmits through the optical system in the reverse direction, is reflected by the beam splitter 61 and is detected by the address light detector 63. It is preferable to use, as the laser 60 for addressing, a relatively long-wavelength laser such as red light.

In the checking server 1 utilizing such a holographic recording medium, in the case of recording registration images on the moving image database, a registration image and an image for reference light are displayed on the spatial light modulator 43 to generate information light and reference light spatially modulated by the registration image and the image for reference light. Then, the information light and reference light are subjected to Fourier transform by the object lens 50 to irradiate the hologram recording layer 21 of the recording medium 20, thereby resulting in the interference of the information light and reference light subjected to Fourier transform on the hologram recording layer 21, and thus in an interference fringe recorded which corresponds to the registration image. Then, in the case of checking browsable moving image data, a searching image is displayed on the spatial light modulator 43 to generate searching light spatially modulated by the searching image. While the searching light is subjected to Fourier transform by the object lens 50 to irradiate the interference fringe on the hologram recording layer 21 of the recording medium 20, the high correlation value between the registration image for the information light forming the interference fringe and the searching image permits the interference fringe to diffract the searching light to reproduce the reference light. More specifically, the correlation value can be obtained by detecting the intensity of the reproduced reference light. It is to be noted that when the registration image and the searching image are binarized images subjected to the binary image processing, it is easy to relate the images to each pixel of the spatial light modulator 43, and thus, the binarization is also preferable in this respect.

In the description above, since a collinear type apparatus is employed in which information light is allowed to coaxially interfere with reference light, it is possible to carry out checking at high speed. It is to be noted that while the reflective holographic recording medium has been described in the description above, it is also possible to achieve the present invention with a transmission holographic recording medium which transmits and then displays reference light reproduced by computing optical correlation. In addition, it is also possible to achieve the present invention with a two-beam interference type apparatus in which the optical path of information light and the optical path of the reference light are separated from each other and crossed at a given degree in a recording medium, rather than the collinear type apparatus. For example, the configuration may be employed in which light from the light source 41 is divided into two light rays by a beam splitter, one of the light rays is modulated by the spatial light modulator to generate information light whereas the other light ray is shaped to generate reference light, and the two types of light are used for irradiation so as to be crossed on the recording medium.

[Example 1] As registered moving image data, 30 pieces of moving image data of 30fps for 10 seconds were prepared, and all of the frame images (300 frames) for each piece were subjected to image processing such as binary image processing to create a group of binarized images $B_i$. Then, the correlation value for autocorrelation (correlation operation between the same images) was normalized as 100 (a.u.: arbitrary unit), and the selecting step was carried out with two threshold values of 70 (a.u.) and 60 (a.u.) set, thereby creating a moving image database. In the case of the threshold value set at 70 (a.u.), the number of registration images was able to be reduced to 2504 with respect to 9000 (300 frames × 30 pieces) binarized images, whereas in the case of the threshold value set at 60 (a.u.), the number of registration images was able to be reduced to 1580 with respect to 9000 (300 frames × 30 pieces) binarized images. The reduction in the number of images for each moving image data is shown in Table 1 below.

[Table 1]

| DB No. | | All Frame | Frame Rate Threshold Value | | DB No. | All Frame | Frame Rate Threshold Value | |
|---|---|---|---|---|---|---|---|---|
| | | | 70 | 60 | | | 70 | 60 |
| Number of Images | 1 | 300 | 17 | 10 | 16 | 300 | 83 | 56 |
| | 2 | 300 | 94 | 60 | 17 | 300 | 60 | 37 |
| | 3 | 300 | 108 | 71 | 18 | 300 | 98 | 55 |
| | 4 | 300 | 20 | 11 | 19 | 300 | 60 | 27 |
| | 5 | 300 | 31 | 18 | 20 | 300 | 10 | 6 |
| | 6 | 300 | 39 | 26 | 21 | 300 | 98 | 47 |
| | 7 | 300 | 130 | 100 | 22 | 300 | 92 | 53 |
| | 8 | 300 | 98 | 60 | 23 | 300 | 95 | 48 |
| | 9 | 300 | 102 | 66 | 24 | 300 | 62 | 34 |
| | 10 | 300 | 45 | 27 | 25 | 300 | 176 | 101 |
| | 11 | 300 | 161 | 104 | 26 | 300 | 76 | 52 |
| | 12 | 300 | 183 | 125 | 27 | 300 | 212 | 173 |
| | 13 | 300 | 22 | 5 | 28 | 300 | 95 | 65 |
| | 14 | 300 | 25 | 9 | 29 | 300 | 28 | 22 |
| | 15 | 300 | 21 | 9 | 30 | 300 | 163 | 103 |
| | | | | | SUM | 9000 | 2504 | 1580 |

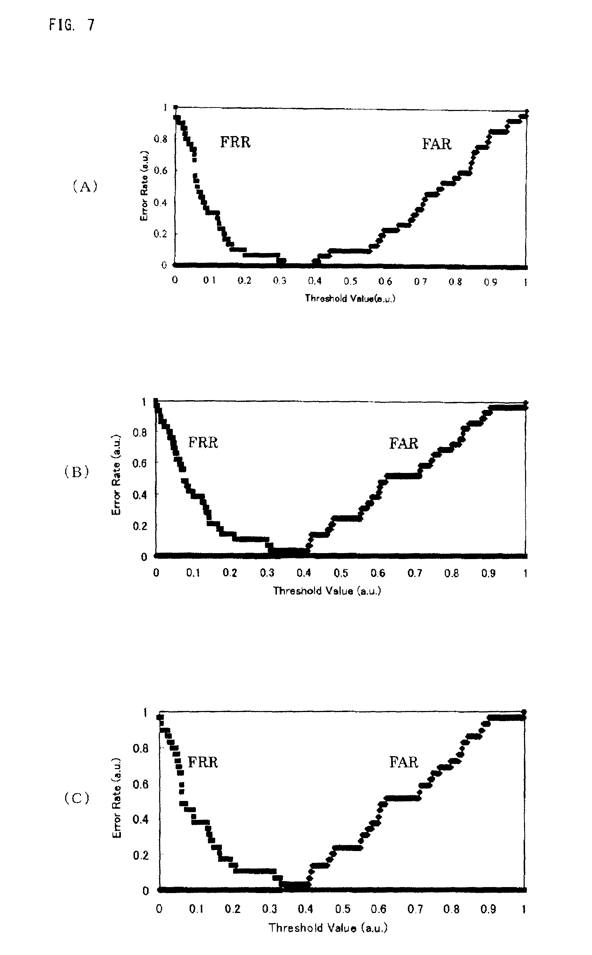

Furthermore, error rates were obtained for each of the moving image database with all of the binarized images registered therein, the moving image database subjected to the selecting step with the threshold value of 70, and the moving image database subjected to the selecting step with the threshold value of 60. Each of FIG. 7(A) to 7(C) is a diagram showing error rates in each moving image database, in which the vertical axis indicates an error rate whereas the horizontal axis indicates a threshold value for the normalized correlation value. The error rate is composed of two error curves, where one of the error curves indicates a registered image rejection rate (FRR: False Rejection Rate) in the case of false recognition of a registered image as an unregistered image, whereas the other indicates an other image acceptance rate (FAR: False Acceptance Rate) in the case of false recognition of a different image as a recorded image. The registered image rejection rate FRR and the other image acceptance rate FAR are each obtained from the true/false rate of the checking result in the case of varying the threshold value. FIGS. 7(A) to 7(C) show the registered image rejection rate FRR and the other image acceptance rate FAR in the case of extracting one frame image from each of the registered 30 pieces of moving image data to create 30 searching images, and comparing the correlation value acquired by checking each of the searching images with a registration image of each moving image database, with the threshold value to determine that the searching image is coincident with the registration image when the correlation value is greater than the threshold value.

The value at which the registered image rejection rate FRR and the other image acceptance rate FAR intersect with each other refers to a threshold value at which both of the registered image rejection rate FRR and the other image acceptance rate FAR are minimized, where the error rate at the value is referred to an EER (Equal Error Rate), and when the EER has a certain range, the range is referred to as a threshold value region. The EER is preferably as small as possible, and if the EER is 0%, the registered image rejection rate FRR and the other image acceptance rate FAR are both 0%, and no error occurs in theory. In addition, the extent of the threshold value region indicates the degree of reliability of checking, and the larger extent means the higher degree of reliability of checking. It is to be noted that in order to also allow similar images to be checked, the threshold value may be deliberately made smaller than the threshold value region to increase the other image acceptance rate FAR.

FIG. 7(A) shows the case of the moving image database with all of the binarized images registered therein, FIG. 7(B) shows the case of the moving image database subjected to the selecting step with the threshold value of 70, and FIG. 7(C) shows the case of the moving image database subjected to the selecting step with the threshold value of 60. The EER is 0% in FIGS. 7(A) and 7(B), and FIG. 7(C) also has an extremely low value of EER: 3.3%.

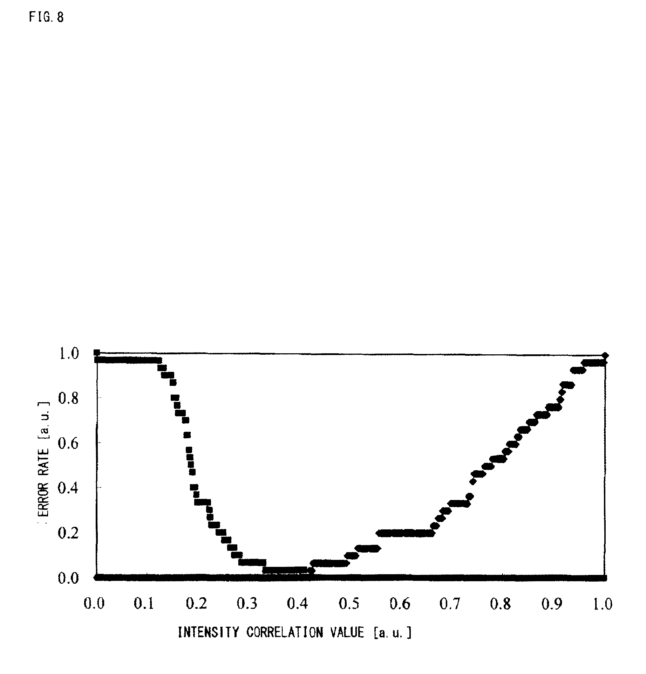

[Example 2] Next, the experiment for evaluating the checking accuracy was made for a checking system utilizing a searching image created from a sample still image of browsable moving image data. It is to be noted that as for the moving image database, 30 pieces of moving image data of 30fps for 10 seconds were prepared as registered moving image data, and all of the frame images (300 frames) for each piece were subjected to image processing such as binary image processing to create a group of binarized images $B_i$ of 9000 images, and a moving image database was used with all of the binarized images registered therein. The sample still image used for searching had a size of $128 \times 96$ pixels, and one sample still image for each piece of registered moving image data, or 30 sample still images in total were subjected to image processing such as binary image processing, and utilized as the searching images. FIG. 8 is a diagram showing error rates in the experiment for evaluating the checking accuracy, in which the vertical axis indicates an error rate whereas the horizontal axis indicates a threshold value for the normalized correlation value. The same as in FIG. 7 applies to the error rates in this example. This result has demonstrated that checking with a high degree of accuracy, EER: 0% is possible.

**Claims**

1. A checking system for checking browsable moving image data that can be in a browsing state on a site on a network, **characterized in that** it comprises: a moving image database in which multiple pieces of registered moving image data is registered as information and checking means for checking the browsable moving image data with the registered moving image data registered in the moving image database,
   wherein the browsable moving image data includes a still image displayed as a sample,
   the moving image database includes a recoding medium on which are recorded a group of registration images created from multiple frame images of reproduced moving images reproduced from the registered moving image data as each piece of registered moving image data, and
   the checking means checks a searching image created from the sample still image of the browsable moving image data with the registration image recorded on the recording medium of the moving image database.

2. The checking system according to claim 1, **characterized by** having a function of arbitrary or randomly extracting a sample still image from the browsable moving image data.

3. The checking system according to claim 1 or 2, **characterized in that** with respect to the group of registration images for the each piece of registered moving image data, a result of a correlation operation between one of the registration image contained in the group of registration images and the other image thereof is less than a preset threshold value.

4. The checking system according to any one of claims 1 to 3, **characterized in that** the registration images are subjected to at least binary image processing while being created from the frame images.

5. The checking system according to claim 4, **characterized in that** the searching image is subjected to at least binary image processing while being created from the sample still image of the browsable moving image data, and the checking means carries out checking through a correlation operation between the searching image and the registration image.

6. The checking system according to any one of claims 1 to 5, **characterized in that** image feature information on the frame images corresponding to each registration image is recorded on the moving image database, and the checking system calculates image feature information on the sample still image of the browsable moving image data to carry out checking with the image feature information recorded on the moving image database.

7. The checking system according to any one of claims 1 to 6, **characterized in that** the registered moving image data is provided with at least one keyword, at least one keyword is added to the browsable moving image data, and the checking means checks a keyword acquired from the keyword data added to the browsable moving image data with the keyword provided for the registered moving image data.

8. The checking system according to any one of claims 1 to 7, **characterized in that** identification data is added to the browsable moving image data when the browsable moving image data is registered in the moving image database.

9. The checking system according to claim 8, **characterized in that** a browsing condition for the browsable moving image data is changed on the basis of the identification data.

10. A method for creating a moving image database in which multiple pieces of registered moving image data are registered as information, **characterized in that** the method comprises:

a reproduction step of reproducing one piece of registered moving image data to obtain reproduced moving images;
a creation step of carrying out image processing including binary image processing for a plurality of frame images of the reproduced moving images to create a plurality of registration images; and
a recording step of recording a group of registration images composed of the plurality of registration images on a recording medium,
and that between the reproduction step and the recording step, a selecting step of carrying out selecting so that a result of a correlation operation between one of the registration images contained in the group of registration images and the other registration image thereof is less than a preset threshold value.

11. The method for creating a moving image database according to claim 10, **characterized in that** the selecting step includes processing of carrying out a correlation operation between the respective registration images created from the respective frame images of the reproduced moving images, and eliminating one of the registration images when the result of the correlation operation is greater than a preset threshold value.

12. The method for creating a moving image database according to claim 10 or 11, **characterized by** comprising a registration data recording step of calculating image feature information for the frame images corresponding to the registration images, and recording the image feature information linked with the registration images.

13. The method for creating a moving image database according to any one of claims 10 to 12, **characterized in that** at least the reproduction step and the creation step are carried out in an information processing device of a registrant carrying one piece of the registered moving image data.

14. A registration system for registering registered moving image data in a moving image database in which multiple pieces of registered moving image data are registered as information, **characterized in that** it comprises:

a network, a server for the moving image database, which is connected to the network, and an information processing device connected to the network,
that the information processing device reproduces one piece of the registered moving image data to acquire reproduced moving images, carries out at least binary image processing for a plurality of frame images of the reproduced moving images to create a plurality of transmission images, and transmits the plurality of transmission images to the server for the moving image database, and
that the server for the moving image database creates a plurality of registration images from the plurality of transmission images, and records on a recording medium, a group of registration images composed of the plurality of registration images.

**15.** The registration system according to claim 14, **characterized in that** the transmission images are the registration images, and the server for the moving image database records, on a recording medium, a plurality of transmission images transmitted from the information processing device as a plurality of registration images.

**16.** The registration system according to claim 14 or 15, **characterized in that** the information processing device carries out a correlation operation between images based on each frame image of the reproduced moving images, and eliminates one of the images when the result of the correlation operation is greater than a preset threshold value.

**17.** A program which, in order to register registered moving image data in a server for a moving image database in which multiple pieces of registered moving image data are registered as information, permits an information processing device connected via a network to the server for the moving image database to function as:

reproduction means for reproducing the registered moving image data to obtain reproduced moving images;
image processing means for carrying out at least binary image processing for a plurality of frame images of the reproduced moving images to create transmission images; and
transmission means for transmitting the plurality of transmission images via the network to the server for the moving image database.

**18.** The program according to claim 17, further for permitting the information processing device to function as selecting means for carrying out a correlation operation between images based on each frame image of the reproduced moving images, and eliminating one of the images when the result of the correlation operation is greater than a preset threshold value.

**19.** The program according to claim 18, further for permitting the information processing device to function as input means for a threshold value, wherein the threshold value input from the input means is used in the selecting means.

FIG.1

FIG. 2

FIG.3

(A)

16 17 2

16 16

17 17

(B) FRAME IMAGE
GRAY LEVEL INFO
COLOR INFO

SELECTING

(D) FRAME IMAGE
GRAY LEVEL INFO
COLOR INFO

BINARIZATION

BINARIZATION

16 16

17 17

(C) BINARIZED
IMAGE

SELECTING

(E) BINARIZED
IMAGE

FIG. 4

```
          ┌─────────────────────────────────┐
  S41     │ ACQUIRE AND REPRODUCE REGISTERED │
          │       MOVING IMAGE DATA          │
          └─────────────────────────────────┘
                          │
                          ▼
          ┌─────────────────────────────────┐
  S42     │  CREATE GROUP OF ALL FRAME IMAGES│
          │              M_i                 │
          └─────────────────────────────────┘
                          │
                          ▼
          ┌─────────────────────────────────┐
  S43     │  CONVERT INTO GROUP OF BINARIZED │
          │           IMAGES B_i             │
          └─────────────────────────────────┘
                          │
                          ▼
          ┌─────────────────────────────────┐
  S44     │   B_i → REFERENCE IMAGE B_p      │
          └─────────────────────────────────┘
                          │
                          ▼
          ┌─────────────────────────────────┐
  S45     │           i + 1 → i              │
          └─────────────────────────────────┘
                          │
                          ▼
          ┌─────────────────────────────────┐
  S46     │  ACQUIRE CORRELATION VALUE V BY  │
          │ CORRELATION OPERATION BETWEEN B_p│
          │             AND B_i              │
          └─────────────────────────────────┘
                          │
                          ▼
  S47         < V < THRESHOLD VALUE >  No
                          │ Yes
                          ▼
          ┌─────────────────────────────────┐
  S48     │   REGISTER REFERENCE IMAGE B_p   │
          └─────────────────────────────────┘
                          │
                          ▼
  S49            < i = N >   No
                          │ Yes
                          ▼
          ┌─────────────────────────────────┐
  S50     │  REGISTER BINARIZED IMAGES B_N   │
          └─────────────────────────────────┘
```

FIG. 5

S51 ACQUIRE SAMPLE STILL IMAGE

S52 CONVERT INTO BINARIZED SEARCHING IMAGE S

S53 ACQUIRE MAXIMUM CORRELATION VALUE $V_{max}$ BY CORRELATION OPERATION BETWEEN S AND GROUP OF REGISTRATION IMAGES $B_m$

S54 $V_{max}$ > CHECKING THRESHOLD VALUE

No

Yes

S56 NO NEXT GROUP OF REGISTRATION IMAGES

No

Yes

S55 RECOGNIZE BROWSABLE MOVING IMAGE DATA AS REGISTERED MOVING IMAGE DATA

S57 RECOGNIZE BROWSABLE MOVING IMAGE DATA AS NOT REGISTERED IN MOVING IMAGE DATABASE

22

FIG. 6

FIG. 7

(A)

(B)

(C)

FIG. 8

<table>
<tr><td colspan="2"><strong>INTERNATIONAL SEARCH REPORT</strong></td><td>International application No.<br>PCT/JP2008/066413</td></tr>
</table>

| A. CLASSIFICATION OF SUBJECT MATTER |
| --- |
| *G06F21/24*(2006.01)i, *G06F17/30*(2006.01)i, *H04N7/173*(2006.01)i |

According to International Patent Classification (IPC) or to both national classification and IPC

| B. FIELDS SEARCHED |
| --- |

Minimum documentation searched (classification system followed by classification symbols)
G06F21/24, G06F17/30, H04N7/173

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | MySpace, Chosakuken Shingai Contents Taisaku o Kyoka, [online], Mai Supesu Kabushiki Kaisha, 2007.05.10, [Retrieved on 03 October, 2008 (03.10.08)], Retrieved from the Internet:<URL: http://www.audiblemagic.com/pdf/MySpace_Japan_ 070510-2.pdf> | 1-7,10-19<br>8,9 |
| Y<br>A | MySpace Launches "Take Down Stay Down" Copyright Protection, [online], Audible Magic Press Release, Audible Magic Corporation, 2007.05.11, [Retrieved on 2008-10-03], Retrieved from the Internet: <URL:http://www. audiblemagic.com/news/press-releases/pr-2007 -05-11.asp> | 1-7,10-19<br>8,9 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  03 October, 2008 (03.10.08) | Date of mailing of the international search report<br>  14 October, 2008 (14.10.08) |
| --- | --- |
| Name and mailing address of the ISA/<br>  Japanese Patent Office | Authorized officer |
| Facsimile No. | Telephone No. |

Form PCT/ISA/210 (second sheet) (April 2007)

<div align="center">

**INTERNATIONAL SEARCH REPORT**

</div>

| | International application No. |
|---|---|
| | PCT/JP2008/066413 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | New MySpace copyright tech turns heads, raises brows, [online], CNET News, CNET Networks, Inc., 2007.05.11, [Retrieved on 2008-10-03], Retrieved from the Internet:<URL:http://news.cnet.com/2100-1030_3-6183162.html> | 1-7,10-19<br>8,9 |
| Y<br>A | Daisy Whitney, Protecting Assets Is Talk of the Town, [online], TV Week News, Crain Communications Inc., 2007.02.26, [Retrieved on 2008-10-03], Retrieved from the Internet:<URL: http://www.tvweek.com/news/2007/02/protecting_assets_is_talk_of_t.php> | 1-7,10-19<br>8,9 |
| Y<br>A | JP 10-187760 A  (Matsushita Electric Industrial Co., Ltd.), 21 July, 1998 (21.07.98), Par. Nos. [0032] to [0034]; Fig. 9 & US 6323877 B1          & EP 000838766 A2 & EP 001460566 A2 | 1-7,10-19<br>8,9 |
| A | JP 2003-256325 A  (Jeifon Kabushiki Kaisha), 12 September, 2003 (12.09.03), Par. Nos. [0010] to [0013]; Fig. 3 (Family: none) | 1-19 |
| A | JP 2000-259832 A  (NEC Corp.), 22 September, 2000 (22.09.00), Par. Nos. [0046] to [0052], [0058] to [0063]; Figs. 2, 4 & US 2003/0123735 A1     & EP 001018688 A2 & JP 2003-323602 A | 1-19 |

Form PCT/ISA/210 (continuation of second sheet) (April 2007)

## INTERNATIONAL SEARCH REPORT

| International application No. |
|---|
| PCT/JP2008/066413 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The inventions of claims 1-9 relate to a moving image data checking system.
    The inventions of claims 10-19 relate to a moving image database creating method and a registering method and program for registering moving image data in a moving image database.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 202 663 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7114567 A